# FASCICULE DE BREVET EUROPEEN

(11) **EP 3 667 247 B1**
(45) Date de publication et mention de la délivrance du brevet: **10.08.2022**
(21) Numéro de dépôt: 19210294.5
(22) Date de dépôt: 20.11.2019
(51) Int. Cl.: G01D 5/14, G01D 5/20

(54) **CAPTEUR INDUCTIF D'ANGLE DE ROTATION**
INDUKTIVER DREHWINKELSENSOR
ROTATION ANGLE INDUCTION SENSOR

(30) Priorité: 13.12.2018 FR 1872861
(43) Date de publication de la demande: 17.06.2020
(73) Titulaire: ArianeGroup SAS, 78130 Les Mureaux (FR)
(72) Inventeur: KLEIN, Manuel, 27207 Vernon Cedex (FR); LE GONIDEC, Serge, 27207 Vernon Cedex (FR); BRUNEAU, Quentin, 27207 Vernon Cedex (FR); GAUTHIER, Romain, 27207 Vernon Cedex (FR)
(74) Mandataire: Cabinet Beau de Loménie

(56) Documents cités:
- EP-A1- 3 062 067
- WO-A1-2017/182177
- FR-A1- 3 055 961
- US-A1- 2015 253 154

## Description

### Domaine Technique

La présente divulgation concerne un capteur d'angle de rotation et un moteur électrique synchrone comprenant un tel capteur d'angle de rotation, ainsi qu'un procédé de mesure d'angle de rotation et un procédé de pilotage d'un moteur électrique synchrone utilisant un tel capteur d'angle de rotation.

### Technique antérieure

Les capteurs d'angle de rotation sont utilisés dans un large nombre d'applications, mais ils sont particulièrement importants dans le pilotage des moteurs électriques synchrones. En effet, dans ces moteurs, comprenant typiquement un rotor avec une pluralité d'aimants permanents distribués autour d'un axe de rotation du rotor et un stator avec une pluralité de bobinages distribués autour de l'axe de rotation du rotor, en opposition aux aimants de la pluralité d'aimants, l'alimentation électrique de chaque bobinage doit normalement être commandée en fonction de l'angle de rotation du rotor par rapport à son axe de rotation afin de piloter le fonctionnement du moteur et la vitesse de rotation du moteur.

Dans l'état de la technique, on utilise pour cette application des capteurs d'angle de rotation tels que des capteurs à effet de Hall ou des résolveurs. Ces capteurs électromagnétiques ont toutefois certains inconvénients, notamment leur taille et leur vulnérabilité dans des environnements exigeants, comme notamment les environnements cryogéniques.

Il est par ailleurs connu de EP 3 062 067 A1 un capteur de position angulaire comprenant une bobine de mesure, dont l'axe est incliné par rapport à l'axe de rotation d'une pale constituée d'un matériau conducteur.

### Exposé de l'invention

La présente divulgation vise à remédier à ces inconvénients en proposant un capteur de d'angle de rotation structurellement simple qui permette une intégration plus facile dans des dispositifs de petite taille tout en offrant une grande robustesse face aux environnements les plus exigeants, y compris les environnements cryogéniques.

Pour cela, suivant un premier aspect, le capteur peut comprendre un arbre rotatif, un ou plusieurs aimants permanents, solidaires de l'arbre rotatif et orientés suivant un axe différent à un axe de rotation de l'arbre rotatif, et une ou plusieurs spires électriquement conductrices disposées autour de l'arbre rotatif. Chaque spire peut couper un plan perpendiculaire à l'axe de rotation.

Grâce à ces dispositions, la rotation de l'aimant permanent avec l'arbre rotatif peut induire, dans chaque spire, une force électromotrice variable en fonction de l'angle de rotation de l'arbre rotatif par rapport à son axe de rotation, permettant ainsi de capter cet angle de rotation par corrélation avec la force électromotrice.

Chaque spire peut couper le plan perpendiculaire à l'axe de rotation à deux ou plus points d'intersection. Chaque aimant permanent peut être orienté radialement par rapport à l'axe de rotation, ou parallèlement à l'axe de rotation. Si le capteur comprend plusieurs aimants permanents et plusieurs spires correspondant chacune à l'un des aimants permanents, chaque spire (13a,13b,13c) peut être inclinée par rapport au plan (P_{R}) perpendiculaire à l'axe de rotation suivant un axe d'inclinaison dont une projection sur le plan perpendiculaire à l'axe de rotation est décalée angulairement autour de l'axe de rotation par rapport aux projections des axes d'inclinaison des autres spires et/ou chaque aimant permanent être décalé angulairement autour de l'axe de rotation par rapport aux autres aimants permanents.

Un deuxième aspect de la présente divulgation concerne un moteur électrique synchrone comprenant un rotor avec une pluralité d'aimants permanents distribués autour d'un axe de rotation du rotor, un stator avec une pluralité de bobinages distribués autour de l'axe de rotation du rotor, en opposition aux aimants permanents de la pluralité d'aimants permanents, un capteur d'angle de rotation suivant le premier aspect, dont l'arbre rotatif est connecté au rotor pour être entraîné en rotation, une unité d'alimentation électrique connectée à la pluralité de bobinages du stator, et une unité de commande connectée à l'unité d'alimentation électrique et au capteur d'angle de rotation pour commander l'alimentation électrique de chacun des bobinages de la pluralité des bobinages du stator en fonction de l'angle de rotation du rotor autour de l'axe de rotation du rotor.

Grâce à ces dispositions, le pilotage du moteur synchrone peut être assuré même sous des contraintes dimensionnelles et environnementales très élevées.

Un troisième aspect de la présente divulgation concerne un procédé de mesure d'angle de rotation utilisant le capteur d'angle de rotation suivant le premier aspect, et comprenant des étapes de mesure d'une tension électrique entre deux extrémités de chaque spire, et corrélation de la tension électrique avec un angle de rotation de l'arbre de rotation autour de son axe de rotation. Ce procédé peut par ailleurs comprendre une étape supplémentaire d'amplification de la tension électrique, afin de faciliter l'étape de mesure de cette tension électrique. En outre, chaque spire peut se trouver en milieu cryogénique. En effet, non seulement ce procédé permet d'opérer en milieu cryogénique, mais les basses températures, en diminuant la résistance électrique des spires, permettent de rendre le capteur plus sensible.

Un quatrième aspect de la présente divulgation concerne un procédé de pilotage d'un moteur électrique synchrone suivant le deuxième aspect, comprenant des étapes de mesure d'une tension électrique entre deux extrémités de la spire, corrélation de la tension électrique avec un angle de rotation du rotor autour de son axe de rotation, et commande de l'alimentation électrique de chacune des bobines du stator suivant l'angle de rotation du rotor autour de son axe de rotation. Comme le procédé précédent, ce procédé peut aussi comprendre une étape supplémentaire d'amplification de la tension électrique, afin de faciliter l'étape de mesure de cette tension électrique.

L'invention sera bien comprise et ses avantages apparaîtront mieux, à la lecture de la description détaillée qui suit, de modes de réalisation représentés à titre d'exemples non limitatifs. La description se réfère aux dessins annexés sur lesquels :

### Brève description des dessins

[Fig. 1A] La figure 1A est une vue en perspective d'un capteur d'angle de rotation suivant un premier mode de réalisation.
[Fig. 1B] La figure 1B illustre une variante du capteur de la figure 1A.
[Fig. 1C] La figure 1C illustre l'évolution du voltage induit dans une spire du capteur de la figure 1A par une rotation à vitesse constante d'un arbre rotatif.
[Fig. 2A] La figure 2A est une vue en perspective d'un capteur d'angle de rotation suivant un deuxième mode de réalisation.
[Fig. 2B] La figure 2B illustre une variante du capteur de la figure 2A.
[Fig. 2C] La figure 2C illustre l'évolution des voltages induits dans trois spires du capteur de la figure 2A par une rotation à vitesse constante d'un arbre rotatif.
[Fig. 2D] La figure 2D est une vue en perspective d'un capteur d'angle de rotation suivant un troisième mode de réalisation.
[Fig. 2E] La figure 2E est une vue du haut de l'arbre rotatif du capteur de la figure 2D.
[Fig. 3] La figure 3 est une vue en perspective d'un capteur d'angle suivant un troisième mode de réalisation.
[Fig. 4] La figure 4 illustre une variante du capteur de la figure 3A.
[Fig. 5] La figure 5 est une vue schématique d'un moteur électrique synchrone incorporant un capteur d'angle de rotation suivant le premier, le deuxième ou le troisième modes de réalisation.
[Fig. 6] La figure 6 est une vue schématique d'une variante du moteur de la figure 5.

### Description des modes de réalisation

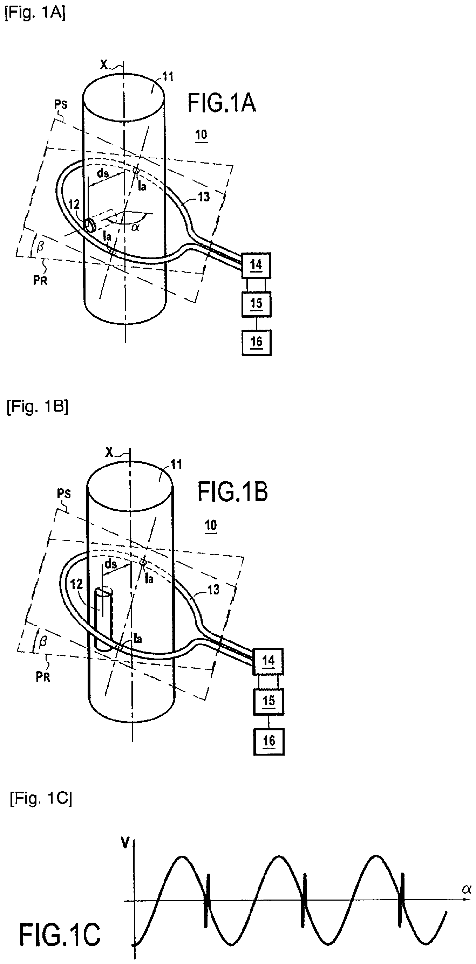

Comme illustré sur la figure 1A, un capteur 10 d'angle de rotation suivant un premier mode de réalisation peut comprendre un arbre rotatif 11, un aimant permanent 12, et une spire 13. L'arbre rotatif 11 peut être disposé de manière à tourner autour d'un axe de rotation X, et l'aimant permanent 12 être orienté suivant un axe différent à l'axe de rotation X, de telle manière que la rotation de l'aimant permanent 12 avec l'arbre rotatif 11 provoque une variation du champ magnétique le long de la spire 13, et donc une force électromotrice dans cette spire 13. Comme dans l'exemple illustré, l'aimant permanent 12 peut notamment être disposé excentré d'une distance d1 ds par rapport à l'axe de rotation X, orienté en direction radiale. Suivant une variante illustrée sur la figure 1B, l'aimant permanent 12 peut alternativement être orienté parallèlement à l'axe de rotation X, quoique d'autres orientations soient également envisageables.

Pour que la force électromotrice induite dans la spire 13 varie, pour une vitesse de rotation déterminée, en fonction de l'angle de rotation α (ALPHA) de l'arbre rotatif 11 autour de l'axe de rotation X, la spire 13 peut être orientée suivant un plan Ps, incliné d'un angle β (BETA) par rapport à un plan PR perpendiculaire à l'axe de rotation X. La spire 13 peut couper ainsi le plan PR à deux points d'intersection la. Grâce à cette inclinaison, et au décalage de l'aimant permanent 12 par rapport à l'axe de rotation X, la rotation de l'aimant permanent 12, avec l'arbre rotatif 11, autour de l'axe de rotation X peut se traduire dans un mouvement sinusoïdal de l'aimant permanent 12 perpendiculairement au plan Ps de la spire 13, pouvant ainsi générer une variation correspondante du flux magnétique traversant la spire 13, et donc une force électromotrice dans la spire 13.

Plus particulièrement, avec un mouvement relatif, et donc une variation du flux magnétique suivant des courbes sinusoïdales, on peut obtenir, pour une vitesse de rotation déterminée, une correspondance bijective, sur 180°, autour de l'axe de rotation de l'arbre rotatif, entre l'angle de rotation α (ALPHA) et la force électromotrice, et donc la tension électrique V, induite dans la spire 13 par rotation de l'aimant permanent 12 autour de l'axe de rotation X de l'arbre rotatif 11, comme illustré sur la figure 1C.

La spire 13 peut être connectée à un amplificateur de voltage 14 et un capteur de voltage 15 pour amplifier et mesurer la tension électrique V induite dans la spire 13 par la rotation de l'aimant permanent 12 autour de l'axe de rotation X de l'arbre rotatif 11. Ce capteur de voltage 15 peut être à son tour connecté à une unité de calcul 16, dans laquelle soit préenregistrée une corrélation entre cette tension électrique V, l'angle de rotation α (ALPHA), et la vitesse de rotation. Pour obtenir cette dernière, l'unité de calcul 16 peut être connectée à un capteur de vitesse distinct (non illustré), ou être configuré pour calculer la vitesse de rotation à partir de l'évolution de l'angle de rotation α (ALPHA) dans le temps lors d'échantillonnages précédents. L'unité de calcul 16 peut être configurée pour calculer alors l'angle de rotation α (ALPHA) à partir de la vitesse de rotation et de la tension électrique induite dans la spire 13, utilisant cette corrélation.

En fonctionnement, la rotation de l'aimant permanent 12, solidaire de l'arbre rotatif 11, autour de l'axe de rotation X, peut induire ainsi une force électromotrice, et donc une tension électrique dans la spire 13, qui varie non seulement en fonction de la vitesse de rotation, mais aussi de l'angle de rotation α (ALPHA). Cette tension électrique V, amplifiée par l'amplificateur 14 est mesurée par le capteur 15, peut être transmise à l'unité de calcul 16 pour calculer avec précision l'angle de rotation α (ALPHA), en utilisant la corrélation prédéterminée entre tension électrique, l'angle de rotation α (ALPHA), et vitesse de rotation.

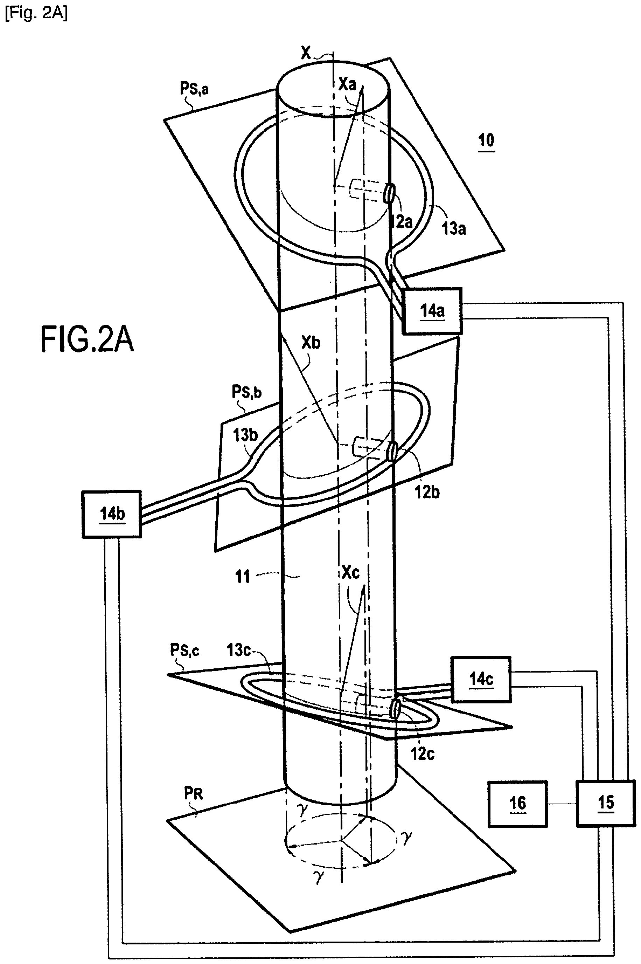

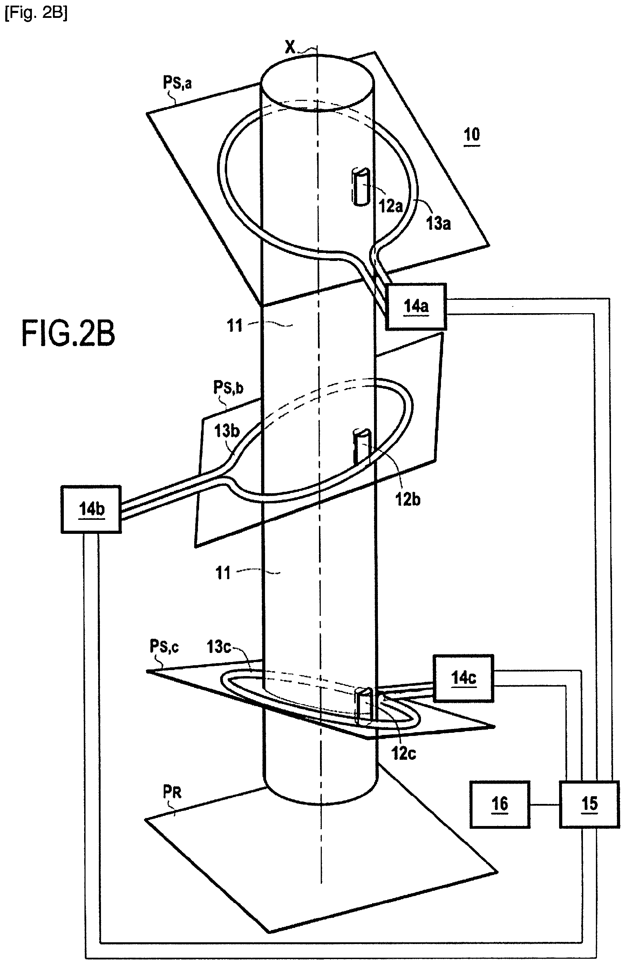

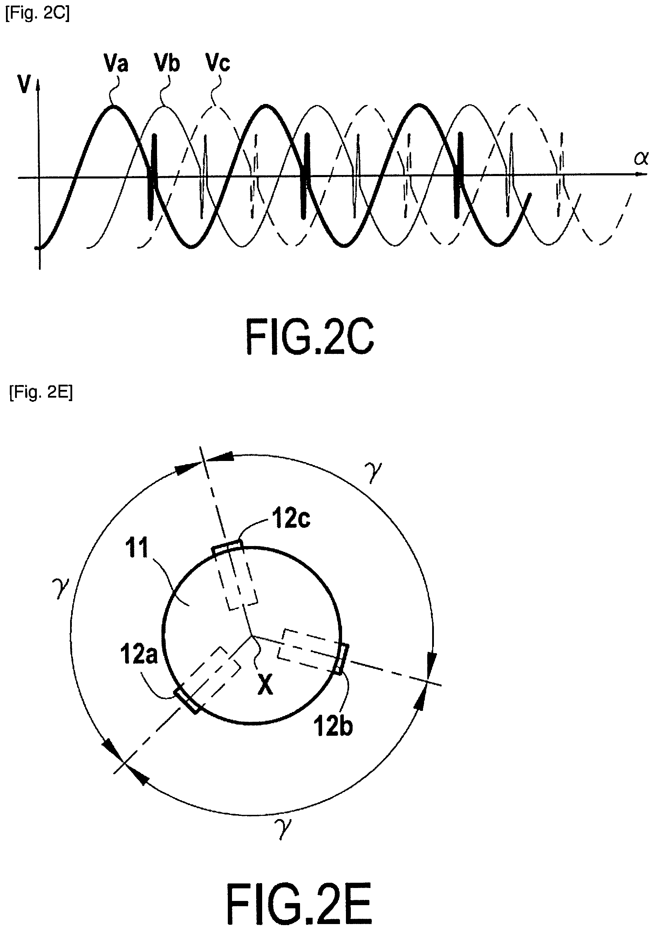

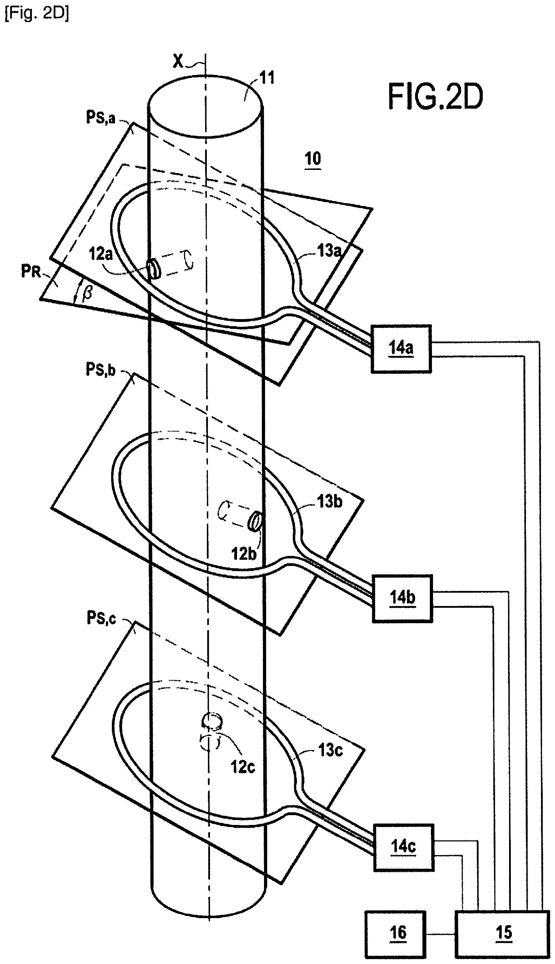

Afin de faciliter cette corrélation sur un tour complet de l'arbre rotatif 11, même sans mesure séparée de la vitesse de rotation, dans un deuxième mode de réalisation, illustré sur la figure 2A, le capteur 10 d'angle de rotation peut comprendre trois spires 13a, 13b, 13c et trois aimants permanents 12a, 12b, 12c. Comme dans l'exemple illustré, chaque aimant permanent 12a, 12b, 12c peut notamment être disposé excentré d'une distance dₛ par rapport à l'axe de rotation X, orienté en direction radiale. Suivant une variante illustrée sur la figure 2B, chaque aimant permanent 12a, 12b, 12c peut alternativement être orienté parallèlement à l'axe de rotation X, quoique d'autres orientations soient également envisageables. Chacune des spires 13a, 13b et 13c peut être associée à un des aimants permanents 12a, 12b, 12c, et chaque paire de spire 13a, 13b, 13c et aimant permanent 12a, 12b, 12c peut être décalée dans la direction de l'axe de rotation par rapport aux autres. Les trois spires 12a, 12b, 12c peuvent être orientées suivant des plans P_{s,a}, P_{s,b}, P_{s,c} inclinés chacun d'un angle β (BETA) par rapport au plan PR perpendiculaire à l'axe de rotation X. Chaque spire 13a, 13b, 13c peut couper ainsi le plan PR à deux points d'intersection la. Surtout, la projection X'ₐ, X'_{b}, X'_{c} de l'axe d'inclinaison de chaque spire 13a, 13b, 13c, perpendiculaire au plan incliné P_{s,a}, P_{s,b}, P_{s,c} correspondant, sur le plan PR perpendiculaire à l'axe de rotation X est aussi décalé par rapport aux autres d'un angle γ (GAMMA), de préférence de 120°. Ainsi, la rotation de l'arbre rotatif 11 autour de l'axe de rotation X permet d'induire trois tensions électriques Vₐ, V_{b}, V_{c} déphasées respectivement de cet angle γ (GAMMA), comme illustré sur la figure 2C. Le rapport entre ces trois tensions électriques Vₐ, V_{b}, V_{c} déphasées peut permettre ainsi d'identifier l'angle de rotation de l'arbre rotatif 11 sur un tour complet de l'arbre rotatif, et ceci indépendamment de la vitesse de rotation, puisqu'elle affectera de la même manière chacune des trois tensions électriques Vₐ, V_{b}, V_{c}. Pour obtenir le même résultat, il est aussi envisageable, comme illustré sur les figures 2D et 2E, de décaler de cet angle γ (GAMMA) la position angulaire des aimants permanents 12a, 12b, 12c autour de l'axe de rotation X, plutôt que les axes d'inclinaison des Xₐ, X_{b}, X_{c} des spires 13a, 13b, 13c correspondantes. Par ailleurs, ces deux possibilités ne sont pas seulement alternatives, mais aussi complémentaires et peuvent donc être combinées.

Chaque spire 13a, 13b, 13c peut être connectée, à travers un amplificateur de voltage 14a,14b,14c correspondant, à un capteur de voltage 15 pour amplifier et mesurer les tensions électriques Vₐ, V_{b}, V_{c} induites dans les spires 13a,13b,13c par la rotation des aimants permanents 12a,12b,12c autour de l'axe de rotation X de l'arbre rotatif 11. Ce capteur de voltage 15 peut être à son tour connecté à une unité de calcul 16, dans laquelle soit préenregistrée une corrélation des rapports entre ces tensions électriques Vₐ, V_{b}, V_{c} et l'angle de rotation α (ALPHA). L'unité de calcul 16 peut ainsi être configurée pour calculer l'angle de rotation α (ALPHA) à partir des tensions électriques Vₐ, V_{b}, V_{c} induites dans les spires 13a, 13b, 13c, utilisant cette corrélation, et cela indépendamment de la vitesse de rotation. Les éléments restants du capteur 10 suivant ce deuxième mode de réalisation sont équivalents à celui du premier mode de réalisation, et reçoivent donc les mêmes repères sur les figures 2A, 2B, 2D et 2E que sur les figures 1A et 1B.

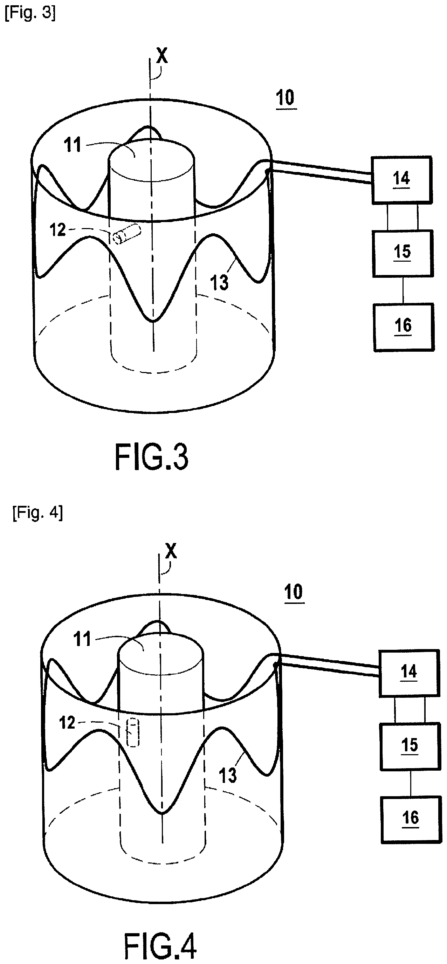

Bien que dans le mode de réalisation illustré sur la figure 1A la spire 13 soit simplement inclinée par rapport au plan P_{R} perpendiculaire à l'axe de rotation X, et ne coupe donc ce plan P_{R} qu'à deux points d'intersection Iₐ, il est également envisageable que la spire 13 soit formée de manière à couper le plan P_{R} à plus de deux points d'intersection Iₐ. Ainsi, suivant un mode de réalisation alternatif illustré sur la figure 3, la spire peut suivre une trajectoire oscillante dans un plan axisymétrique P_{C} autour de l'axe de rotation X, de manière à couper le plan P_{R} à plus de deux points d'intersection Iₐ. Comme dans l'exemple de la figure 3, l'aimant permanent 12 peut notamment être disposé excentré d'une distance d1 ds par rapport à l'axe de rotation X, orienté en direction radiale. Suivant une variante illustrée sur la figure 4, l'aimant permanent 12 peut alternativement être orienté parallèlement à l'axe de rotation X, quoique d'autres orientations soient également envisageables. Tous les éléments du capteur 10 illustré sur ces figures 3 et 4 sont équivalents à ceux des figures 1 et 2, et leur fonctionnement analogue, en ce que la rotation de l'aimant permanent 12, avec l'arbre rotatif 11, autour de l'axe de rotation X, peut induire dans la spire 13 une tension électrique variable en fonction non seulement de la vitesse de rotation, mais aussi de l'angle de rotation α (ALPHA) de l'arbre rotatif 11 autour de l'axe de rotation X, permettant ainsi à l'unité de calcul 16 de calculer avec précision l'angle de rotation α (ALPHA), en utilisant la corrélation prédéterminée entre tension électrique, l'angle de rotation α (ALPHA), et vitesse de rotation. Les éléments du capteur 10 suivant les deux variantes des figures 3 et 4 reçoivent donc les mêmes repères sur ces figures que les éléments correspondants sur les figures 1A et 1B.

Le capteur 10 d'angle de rotation suivant chacun des modes de réalisation susmentionnés peut notamment être intégré dans un moteur électrique synchrone afin de permettre son pilotage. Par exemple, comme illustré sur la figure 4, un moteur électrique synchrone 20 peut comprendre un rotor 21, monté rotatif autour d'un axe de rotation X', un stator 22, une unité d'alimentation électrique 23, une unité de commande 24, et un capteur 10 d'angle de rotation suivant l'un ou l'autre des modes de réalisation susmentionnés. Le rotor 21 peut comprendre une pluralité d'aimants permanents 211 distribués autour de l'axe de rotation X'. Le stator 22 peut comprendre une pluralité de bobinages 221 distribués autour de l'axe de rotation X', en opposition aux aimants permanents 211. Chacun de ces bobinages 221 peut être connecté électriquement à l'unité d'alimentation électrique 23, qui peut être un circuit électrique avec une source d'alimentation en courant continu, et configuré pour transformer ce courant continu en courant alternatif transmis à chacun des bobinages 221 avec un décalage de phase entre bobinages 221 permettant d'entraîner les aimants permanents 211 du rotor 21 en rotation autour de l'axe de rotation X'.

Pour piloter cette alimentation électrique des bobinages 221, et en particulier la fréquence, la phase et l'amplitude du courant alternatif transmis à chaque bobinage 221, l'unité d'alimentation électrique 23 peut être connectée à l'unité de commande 24, qui peut également être connectée au capteur 10 d'angle de rotation pour recevoir un signal indiquant une valeur de l'angle de rotation α (ALPHA) captée par ce capteur 10 d'angle de rotation. L'unité de commande 24 peut être configurée pour réaliser un pilotage du moteur électrique 20 en boucle fermée, avec un asservissement en angle ou vitesse de rotation, ou en boucle ouverte, pour vérifier la marge en décalage de phase entre les bobinages 221.

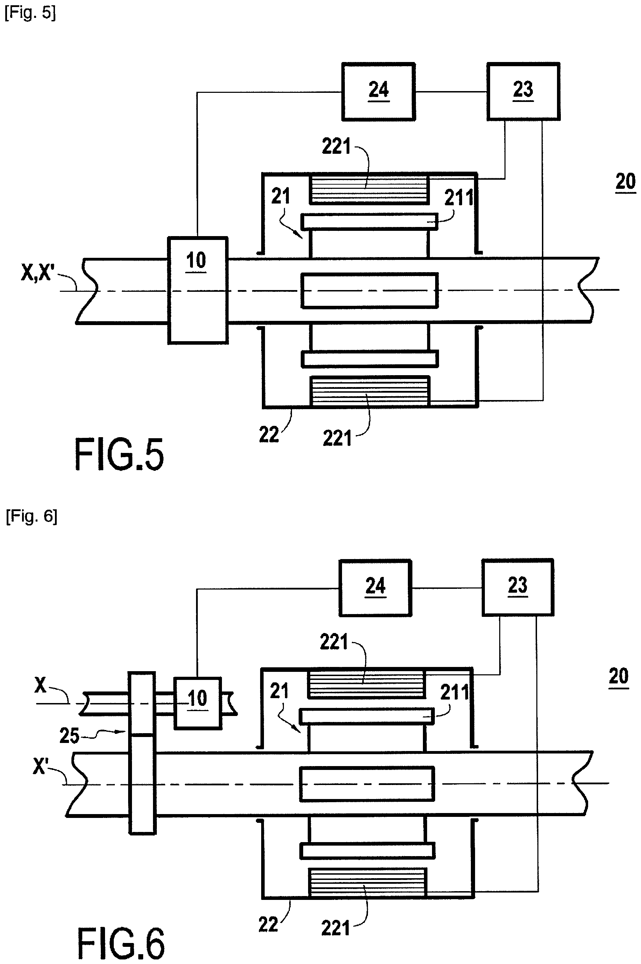

Comme illustré sur la figure 5, l'arbre rotatif 11 du capteur 10 d'angle de rotation peut être un arbre de sortie du moteur électrique 20, couplé directement au rotor 21, de telle manière que l'axe de rotation X de l'arbre rotatif 11 et l'axe de rotation X' du rotor 21 coïncident, ainsi que l'angle de rotation α (ALPHA) de l'arbre rotatif 11 et celui du rotor 21. Toutefois, comme dans la variante illustrée sur la figure 6, il est également envisageable d'interposer une transmission 25 entre l'arbre rotatif 11 du capteur 10 d'angle de rotation et le rotor 21, de manière à obtenir un décalage entre l'axe de rotation X de l'arbre rotatif 11 et l'axe de rotation X' du rotor 21 et/ou une multiplication ou démultiplication entre l'angle de rotation α (ALPHA) de l'arbre rotatif 11 et celui du rotor 21. Cette transmission 25 peut être formée par un engrenage, comme illustré, ou par d'autres moyens de transmission mécanique bien connus de la personne du métier, comme une courroie, une chaîne, des roues de friction, etc. Tous les éléments restants du moteur 20 illustré sur cette figure 6 sont équivalents à ceux de la figure 5, et leur fonctionnement analogue. Ils reçoivent donc les mêmes repères.

En fonctionnement, dans le moteur électrique synchrone 20 de la figure 5 ou 6, le capteur 10 d'angle de rotation peut mesurer l'angle de rotation α (ALPHA) de l'arbre rotatif 11, comme précédemment décrit, en mesurant la tension électrique induite entre les deux extrémités de la spire 13 par la rotation de l'aimant permanent 12 avec l'arbre rotatif 11, et en utilisant ensuite une corrélation de cette tension électrique avec l'angle de rotation α (ALPHA) de l'arbre rotatif 11. Ensuite, la valeur de cet angle de rotation α (ALPHA) mesuré par le capteur 10 d'angle de rotation peut être transmise à l'unité de commande 24 pour piloter la fréquence, la phase et l'amplitude du courant alternatif transmis à chaque bobinage 221 du stator 22, et ainsi piloter effectivement le fonctionnement du moteur électrique synchrone 20.

Quoique la présente invention ait été décrite en se référant à des exemples de réalisation spécifiques, il est évident que des différentes modifications et changements peuvent être effectués sur ces exemples sans sortir de la portée générale de l'invention telle que définie par les revendications. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif.

## Revendications

1. Capteur (10) d'angle de rotation comprenant :
un arbre rotatif (11),
un ou plusieurs aimants permanents (12;12a,12b,12c), solidaires de l'arbre rotatif (11) et orientés suivant un axe différent d'un axe de rotation (X) de l'arbre rotatif (11), et
une ou plusieurs spires (13), électriquement conductrices disposées autour de l'arbre rotatif (11), et
dans lequel chaque spire (13;13a,13b,13c) correspond à un des aimants permanents (12;12a,12b,12c) et coupe un plan (P_{R}) perpendiculaire à l'axe de rotation (X).

2. Capteur (10) d'angle de rotation suivant la revendication 1, dans lequel chaque spire (13) coupe le plan (P_{R}) perpendiculaire à l'axe de rotation (X) à deux ou plus points d'intersection (Iₐ).

3. Capteur (10) d'angle de rotation suivant l'une quelconque des revendications 1 ou 2, dans lequel chaque aimant permanent (12) est orienté radialement par rapport à l'axe de rotation (X).

4. Capteur (10) d'angle de rotation suivant l'une quelconque des revendications 1 ou 2, dans lequel chaque aimant permanent (12) est orienté parallèlement à l'axe de rotation (X).

5. Capteur d'angle de rotation suivant l'une quelconque des revendications 1 à 4, comprenant plusieurs aimants permanents (12a,12b,12c) et plusieurs spires (13a,13b,13c) correspondant chacune à l'un des aimants permanents (12a,12b,12c), et dans lequel chaque spire (13a,13b,13c) est inclinée par rapport au plan (P_{R}) perpendiculaire à l'axe de rotation (X) suivant un axe d'inclinaison (Xₐ,X_{b},X_{c}) dont une projection sur le plan (P_{R}) perpendiculaire à l'axe de rotation (X) est décalée angulairement autour de l'axe de rotation (X) par rapport aux projections des axes d'inclinaison (Xₐ,X_{b},X_{c}) des autres spires (13a,13b,13c) et/ou chaque aimant permanent (12a, 12b,12c) est décalé angulairement autour de l'axe de rotation (X) par rapport aux autres aimants permanents (12a,12b,12c).

6. Moteur électrique synchrone (20) comprenant :
un rotor (21) avec une pluralité d'aimants permanents (211) distribués autour d'un axe de rotation (X') du rotor (21),
un stator (22) avec une pluralité de bobinages (221) distribués autour de l'axe de rotation (X') du rotor (21), en opposition aux aimants permanents (211) de la pluralité d'aimants permanents (211),
un capteur (10) d'angle de rotation suivant l'une quelconque des revendications 1 à 5, dont l'arbre rotatif (11) est connecté au rotor (21) pour être entraîné en rotation,
une unité d'alimentation électrique (23) connectée à la pluralité de bobinages du stator (22), et
une unité de commande (24) connectée à l'unité d'alimentation électrique (23) et au capteur (10) d'angle de rotation pour commander l'alimentation électrique de chacun des bobinages (221) de la pluralité des bobinages (221) du stator (22) en fonction de l'angle de rotation (a) du rotor (21) autour de l'axe de rotation (X') du rotor (21).

7. Procédé de mesure d'angle de rotation utilisant le capteur (10) d'angle de rotation suivant l'une quelconque des revendications 1 à 5, et comprenant des étapes de :
mesure d'une tension électrique (V;Vₐ,V_{b},V_{c}) entre deux extrémités de chaque spire (13;13a,13b,13c), et
corrélation de la tension électrique (V;Vₐ,V_{b},V_{c}) avec un angle de rotation (a) de l'arbre de rotation (11) autour de son axe de rotation (X).

8. Procédé de mesure de position angulaire suivant la revendication 7, comprenant en outre une étape d'amplification de la tension électrique (V;Vₐ,V_{b},V_{c}).

9. Procédé de mesure de position angulaire suivant l'une quelconque des revendications 7 ou 8, dans lequel chaque spire (13;13a,13b,13c) se trouve en milieu cryogénique.

10. Procédé de pilotage d'un moteur électrique synchrone suivant la revendication 6, comprenant des étapes de :
mesure d'une tension électrique (V;Vₐ,V_{b},V_{c}) entre deux extrémités de chaque spire (13 ; 13a,13b,13c),
corrélation de la tension électrique (V;Vₐ,V_{b},V_{c}) avec un angle de rotation du rotor (21) autour de son axe de rotation (X'), et
commande de l'alimentation électrique de chacune des bobines (221) du stator (22) suivant l'angle de rotation du rotor (21) autour de son axe de rotation (X').

## Patentansprüche

1. Drehwinkelsensor (10), umfassend:
eine umlaufende Welle (11),
einen oder mehrere Permanentmagnete (12; 12a, 12b, 12c), die mit der umlaufenden Welle (11) fest verbunden und entlang einer von einer Rotationsachse (X) der umlaufenden Welle (11) verschiedenen Achse ausgerichtet sind, und
eine oder mehrere elektrisch leitende Windungen (13), die um die umlaufende Welle (11) herum angeordnet sind, und
wobei jede Windung (13;13a,13b,13c) einem der Permanentmagneten (12; 12a, 12b, 12c) entspricht und eine Ebene (P_{R}) senkrecht zur Rotationsachse (X) schneidet.

2. Drehwinkelsensor (10) nach Anspruch 1, bei dem jede Windung (13) die Ebene (P_{R}) senkrecht zur Rotationsachse (X) an zwei oder mehr Schnittpunkten (Iₐ) schneidet.

3. Drehwinkelsensor (10) nach einem der Ansprüche 1 oder 2, bei dem jeder Permanentmagnet (12) radial zur Rotationsachse (X) ausgerichtet ist.

4. Drehwinkelsensor (10) nach einem der Ansprüche 1 oder 2, bei dem jeder Permanentmagnet (12) parallel zur Rotationsachse (X) ausgerichtet ist.

5. Drehwinkelsensor nach einem der Ansprüche 1 bis 4, umfassend mehrere Permanentmagnete (12a, 12b, 12c) und mehrere Windungen (13a, 13b, 13c), die jeweils einem der Permanentmagneten (12a, 12b, 12c) entsprechen, und bei dem jede Windung (13a, 13b, 13c) gegenüber der Ebene (P_{R}) senkrecht zur Rotationsachse (X) entlang einer Neigungsachse (Xₐ, X_{b}, X_{c}) geneigt ist, von der eine Projektion auf die Ebene (P_{R}) senkrecht zur Rotationsachse (X) gegenüber den Projektionen der Neigungsachsen (Xₐ, X_{b}, X_{c}) der anderen Windungen (13a, 13b, 13c) um die Rotationsachse (X) winkelmäßig versetzt ist, und/oder jeder Permanentmagnet (12a, 12b, 12c) gegenüber den anderen Permanentmagneten (12a, 12b, 12c) um die Rotationsachse (X) winkelmäßig versetzt ist.

6. Synchron-Elektromotor (20), umfassend:
einen Rotor (21) mit einer Vielzahl von um eine Rotationsachse (X') des Rotors (21) verteilten Permanentmagneten (211),
einen Stator (22) mit einer Vielzahl von Wicklungen (221), die den Permanentmagneten (211) der Vielzahl von Permanentmagneten (211) gegenüberstehend um die Rotationsachse (X') des Rotors (21) verteilt sind,
einen Drehwinkelsensor (10) nach einem der Ansprüche 1 bis 5, dessen umlaufende Welle (11) mit dem Rotor (21) verbunden ist, um drehangetrieben zu werden,
eine Stromversorgungseinheit (23), die mit der Mehrzahl von Wicklungen des Stators (22) verbunden ist, und
eine Steuereinheit (24), die mit der Stromversorgungseinheit (23) und mit dem Drehwinkelsensor (10) verbunden ist, um die Stromversorgung einer jeden der Wicklungen (221) der Vielzahl von Wicklungen (221) des Stators (22) in Abhängigkeit von dem Drehwinkel (α) des Rotors (21) um die Rotationsachse (X') des Rotors (21) zu steuern.

7. Verfahren zum Messen des Drehwinkels unter Verwendung des Drehwinkelsensors (10) nach einem der Ansprüche 1 bis 5, und umfassend Schritte der:
Messung einer elektrischen Spannung (V; Vₐ,V_{b},V_{c}) zwischen zwei Enden einer jeden Windung (13; 13a, 13b, 13c), und
Korrelation der elektrischen Spannung (V; Vₐ,V_{b},V_{c}) mit einem Drehwinkel (α) der Rotationswelle (11) um ihre Rotationsachse (X).

8. Verfahren zum Messen einer Winkelposition nach Anspruch 7, ferner umfassend einen Schritt des Verstärkens der elektrischen Spannung (V; Vₐ,V_{b},V_{c}).

9. Verfahren zum Messen einer Winkelposition nach einem der Ansprüche 7 oder 8, bei dem sich jede Windung (13; 13a, 13b, 13c) in kryogenem Medium befindet.

10. Verfahren zum Steuern eines Synchron-Elektromotors nach Anspruch 6, umfassend die Schritte der:
Messung einer elektrischen Spannung (V; Vₐ,V_{b},V_{c}) zwischen zwei Enden einer jeden Windung (13; 13a, 13b, 13c),
Korrelation der elektrischen Spannung (V; Vₐ,V_{b},V_{c}) mit einem Drehwinkel des Rotors (21) um seine Rotationsachse (X') und
Steuerung der Stromversorgung einer jeden der Wicklungen (221) des Stators (22) entsprechend dem Drehwinkel des Rotors (21) um seine Rotationsachse (X').

## Claims

1. A rotation angle sensor (10) comprising:
a rotary shaft (11),
one or several permanent magnets (12; 12a, 12b, 12c), secured to the rotary shaft (11) and oriented along an axis different from an axis of rotation (X) of the rotary shaft (11), and
one or several electrically conductive turns (13) disposed around the rotary shaft (11), and
wherein each turn (13; 13a, 13b, 13c) corresponds to one of the permanent magnets (12; 12a, 12b, 12c) and intersects a plane (P_{R}) perpendicular to the axis of rotation (X).

2. The rotation angle sensor (10) according to claim 1, wherein each turn (13) intersects the plane (P_{R}) perpendicular to the axis of rotation (X) at two intersection points (Iₐ) or more.

3. The rotation angle sensor (10) according to any one of claims 1 or 2, wherein each permanent magnet (12) is oriented radially with respect to the axis of rotation (X).

4. The rotation angle sensor (10) according to any one of claims 1 or 2, wherein each permanent magnet (12) is oriented parallel to the axis of rotation (X).

5. The rotation angle sensor according to any one of claims 1 to 4, comprising several permanent magnets (12a, 12b, 12c) and several turns (13a, 13b, 13c) each corresponding to one of the permanent magnets (12a, 12b, 12c), and wherein each turn (13a, 13b, 13c) is inclined relative to the plane (P_{R}) perpendicular to the axis of rotation (X) along an axis of inclination (Xₐ, X_{b}, X_{c}) of which a projection on the plane (P_{R}) perpendicular to the axis of rotation (X) is angularly offset about the axis of rotation (X) relative to the projections of the axes of inclination (Xₐ, X_{b}, X_{c}) of the other turns (13a, 13b, 13c) and/or each permanent magnet (12a, 12b, 12c) is angularly offset about the axis of rotation (X) relative to the other permanent magnets (12a, 12b, 12c).

6. A synchronous electric motor (20) comprising:
a rotor (21) with a plurality of permanent magnets (211) distributed about an axis of rotation (X') of the rotor (21),
a stator (22) with a plurality of windings (221) distributed about the axis of rotation (X') of the rotor (21), in opposition to the permanent magnets (211) of the plurality of permanent magnets (211),
a rotation angle sensor (10) according to any one of claims 1 to 5, the rotary shaft (11) of which is connected to the rotor (21) to be driven in rotation,
a power supply unit (23) connected to the plurality of windings of the stator (22), and
a control unit (24) connected to the power supply unit (23) and to the rotation angle sensor (10) for controlling the power supply to each of the windings (221) of the plurality of windings (221) of the stator (22) as a function of the angle of rotation (a) of the rotor (21) about the axis of rotation (X') of the rotor (21).

7. A method for measuring a rotation angle using the rotation angle sensor (10) according to any one of claims 1 to 5, and comprising the steps of:
measuring an electrical voltage (V; Vₐ, V_{b}, V_{c}) between two ends of each turn (13; 13a, 13b, 13c), and
correlating the electrical voltage (V; Vₐ, V_{b}, V_{c}) with an angle of rotation (a) of the rotation shaft (11) about its axis of rotation (X).

8. A method for measuring an angular position according to claim 7, further comprising a step of amplifying the electrical voltage (V; Vₐ, V_{b}, V_{c}).

9. The method for measuring an angular position according to any one of claims 7 or 8, wherein each turn (13; 13a, 13b, 13c) is in a cryogenic medium.

10. A method for piloting a synchronous electric motor according to claim 6, comprising the steps of:
measuring an electrical voltage (V; Vₐ, V_{b}, V_{c}) between two ends of each turn (13; 13a, 13b, 13c),
correlating the electrical voltage (V; Vₐ, V_{b}, V_{c}) with an angle of rotation of the rotor (21) about its axis of rotation (X'), and
controlling the power supply to each of the coils (221) of the stator (22) according to the angle of rotation of the rotor (21) about its axis of rotation (X').
